# EUROPEAN PATENT APPLICATION

(11) **EP 4 317 278 A1**
(43) Date of publication of application: **07.02.2024**
(21) Application number: 22779058.1
(22) Date of filing: 31.03.2022
(51) Int. Cl.: C08J 9/32, C08J 9/14, C08K 7/10, C09D 7/65, C09D 7/61, C09J 11/08, C09J 11/04

(54) **COMPOSITION OF HEAT-EXPANDABLE MICROSPHERES AND APPLICATION THEREOF**

(30) Priority: 02.04.2021 CN 202110363704
(71) Applicant: Yantai Zhenghai Magnetic Material Co., Ltd., Yantai Shandong 264006 (CN); Yantai Gaoshi New Matrerial Technology Co., Ltd., Shandong 265500 (CN)
(72) Inventor: LI, Zhiqiang, Yantai, Shandong 264006 (CN); GAO, Mingliang, Yantai, Shandong 264006 (CN); YU, Yongjiang, Yantai, Shandong 264006 (CN); ZHOU, Hongyu, Yantai, Shandong 264006 (CN); ZHOU, Bin, Yantai, Shandong 264006 (CN); WANG, Pengfei, Yantai, Shandong 264006 (CN); WEI, Rui, Yantai, Shandong 264006 (CN)
(74) Representative: Gille Hrabal Partnerschaftsgesellschaft mbB Patentanwälte
(86) International application number: PCT/CN2022/084264
(87) International publication number: WO 2022/206876

(57) **Abstract**

Disclosed are a composition of heat-expandable microspheres and an application thereof. The composition comprises heat-expandable microspheres and a solvent, wherein: (1) the particle size of the heat-expandable microspheres is 5 µm ≤ D ≤ 40 µm, preferably 8 µm ≤ D ≤ 20 µm; (2) the thickness of the walls of at least 60% of the heat-expandable microspheres is ≤ 5 µm, preferably the thickness is ≤ 3 µm; and (3) the solvent at least comprises one organic solvent having a boiling point of above 220°C. A thermal expansion coating comprising the composition has a stable structure, relatively high resistance to thermal shrinkage, relatively high mechanical strength and adhesion, can be applied in the fixation of high temperature resistant parts, and can maintain the bonding stability thereof when placed long-term in a high temperature environment (140-180°C).

## Description

The present application claims benefits of priority to the prior application with the patent application No. 202110363704.5 and entitled "COMPOSITION OF HEAT-EXPANDABLE MICROSPHERES AND USE THEREOF" filed before China National Intellectual Property Administration on April 2, 2021, which is incorporated herein by reference in its entirety.

### TECHNICAL FIELD

The present disclosure belongs to the field of expandable microspheres, and in particular relates to a composition of heat-expandable microspheres and use thereof.

### BACKGROUND

Expandable microspheres (also known as foaming powder) are thermoplastic hollow polymer microspheres, which consist of a thermoplastic polymer shell and a liquid alkane enclosed in the shell. When heated to a certain temperature, the thermoplastic polymer shell softens, the liquid alkane in the shell gradually vaporizes, and the gas expands, so that the pressure in the shell increases, and the microspheres expand in volume and become larger. Based on the aforementioned characteristics of the expandable microspheres, they are usually widely used in fields including thermal expansion coating materials, plastics, wallpapers, adhesives, inks, printing and the like. However, in the prior art, the expandable microspheres with thin shell walls will rupture under higher temperature and internal pressure, so that the expected expansion ratio of the expandable microspheres cannot be achieved, and it will also lead to a decrease in the adhesion of a coating material, adhesive and the like comprising the expandable microspheres in an application process. Based on this, the expandable microspheres with thin shell walls have long been given up. How to improve the application of the expandable microspheres to reduce the problems of a low expansion ratio, decreased adhesion, and/or low high-temperature resistance caused by thin-walled expandable microspheres in back-end applications, and to optimize the thickness of the shell wall of the expandable microspheres to ensure that the thickness of the shell wall is enough to resist the problems of damage and/or rupture in the process of mixing, stirring, pouring, curing and bonding, and finishing of adhesive substances has become an urgent technical problem to be solved in the art.

### SUMMARY

In order to improve the aforementioned technical problem, the present disclosure provides a composition of heat-expandable microspheres, comprising heat-expandable microspheres and a solvent, wherein:
(1) a particle size of the heat-expandable microspheres is 5 µm ≤ D ≤ 40 µm, e.g., 8 µm ≤ D ≤ 20 µm, such as D = 5, 6, 7, 8, 9, 10, 11, 12, 13, 14, 15, 16, 17, 18, 19 or 20 µm;
(2) a thickness of a wall of at least 60% of the heat-expandable microspheres is ≤ 5 µm, e.g., the thickness is ≤ 3 µm, and for example, the thickness is 4.5 µm, 3 µm, 2 µm, 1 µm, or 0.5 µm; and
(3) the solvent at least comprises one organic solvent having a boiling point of above 220 °C.

According to an embodiment of the present disclosure, an initial thermal expansion temperature T₁ of the heat-expandable microspheres is 100 °C ≤ T₁ ≤ 200 °C. For example, T₁ is 125 °C ≤ T₁ ≤ 180 °C, exemplarily 120 °C, 130 °C, 150 °C, 160 °C, 170 °C, 190 °C, or any value between the enumerated temperature points.

According to an embodiment of the present disclosure, a maximum heat-resistant temperature T₂ of the heat-expandable microspheres is 145 °C ≤ T₂ ≤ 215 °C. For example, T₂ is 150 °C ≤ T₂ ≤ 205 °C, exemplarily 155 °C, 160 °C, 165 °C, 175 °C, 185 °C, 195 °C, 200 °C, or any value between the enumerated temperature points.

As can be understood by those skilled in the art, the initial thermal expansion temperature T₁ is ≤ the maximum heat-resistant temperature T₂.

According to an embodiment of the present disclosure, a weight fraction of heat-expandable microspheres with a particle size of 8 µm ≤ D ≤ 20 µm is no less than 60%, e.g., 60%, 65%, 70%, 72%, 76%, 80%, 90%, or 100% of the total weight of the heat-expandable microspheres; and preferably, a weight fraction of heat-expandable microspheres with a particle size of 10 µm ≤ D ≤ 15 µm is no less than 50%, e.g., 55%, 56%, 60%, or 70% of the total weight of the heat-expandable microspheres.

According to an embodiment of the present disclosure, the heat-expandable microspheres comprise a thermoplastic polymer shell and a liquid alkane enclosed within the thermoplastic polymer shell. For example, the material of the thermoplastic polymer shell is made of a heat-melt substance or a substance that will crack when heated and expanded. For example, the material is selected from a copolymer of vinylidene chloride and acrylonitrile, polyvinyl alcohol, polyvinyl butyral, polymethylmethacrylate, polyacrylonitrile, polyvinylidene chloride, polysulfone, a homopolymer of vinylidene chloride, a random terpolymer of vinylidene chloride, acrylonitrile and divinylbenzene, polystyrene or polyvinyl chloride.

According to an embodiment of the present disclosure, the liquid alkane may be one, two or more selected from liquid ethane, liquid propane, liquid isobutane, n-pentane, and isopentane.

According to an embodiment of the present disclosure, the organic solvent having a boiling point of above 220 °C may be selected from a dodecanol ester.

According to an embodiment of the present disclosure, the solvent may comprise one or two of ethylene glycol butyl ether and dipropylene glycol butyl ether, in addition to at least one organic solvent having a boiling point of above 220 °C.

In the present disclosure, the "particle size" refers to the median particle diameter *D₅₀* of the heat-expandable microspheres before heat expansion, and the "thickness" refers to the thickness of the shell wall of a single heat-expandable microsphere before heat expansion.

The aforementioned particle sizes are volume average diameters, and the diameter of the unexpanded heat-expandable microspheres and the thickness of the shell wall of the microspheres can be determined by any method known in the art.

According to an embodiment of the present disclosure, a weight ratio of the heat-expandable microspheres to the solvent is (4-40):1, preferably (5-20):1, and exemplarily 4:1, 5:1, 6:1, 8:1.2, 7:1, 8:1, 9:1, 10:1, 15:1, or 17:1.

According to an embodiment of the present disclosure, the composition of heat-expandable microspheres may optionally further comprise an inorganic fiber. For example, the inorganic fiber is filamentary or flaky (e.g., lamellar). For example, the inorganic fiber may be one, two or more selected from a nano-aluminosilicate fiber, a carbon fiber and a boron fiber, etc. After the composition is expanded, the inorganic fiber can be infiltrated with the resin in the coating described below, so as to play a role of skeleton support and strength enhancer in the coating described below, thereby improving the strength and shrinkage resistance of the expandable coating.

According to an embodiment of the present disclosure, a weight ratio of the inorganic fiber to the solvent is (0-2):1, e.g., (0.5-1.5):1, and exemplarily 0.5:1, 3:5, 0.7:1, 0.85:1, 0.9:1, 1:1, or 1.2:1. According to an embodiment of the present disclosure, an expansion ratio of the composition of heat-expandable microspheres is 150%-300%, e.g. 180%-250%.

According to an exemplary embodiment of the present disclosure, the composition of heat-expandable microspheres comprises heat-expandable microspheres, a solvent and an inorganic fiber, wherein:
(1) a weight fraction of heat-expandable microspheres with a particle size of 8 µm ≤ D ≤ 20 µm is no less than 60%, e.g., 60%, 65%, 70%, 72%, 76%, 80%, 90%, or 100% of the total weight of the heat-expandable microspheres;
   a weight fraction of heat-expandable microspheres with a particle size of 10 µm ≤ D ≤ 15 µm is no less than 50%, e.g., 55%, 56%, 60%, or 70% of the total weight of the heat-expandable microspheres;
(2) a thickness of a wall of at least 60% of the heat-expandable microspheres is ≤ 3 µm;
(3) the solvent at least comprises a dodecanol ester, and a weight ratio of the heat-expandable microspheres to the solvent is (5-20): 1; and
(4) the inorganic fiber is a nano-aluminosilicate fiber, and a weight ratio of the inorganic fiber to the solvent is (0.5-1.5):1.

Exemplarily, the composition of heat-expandable microspheres comprises heat-expandable microspheres, a solvent and an inorganic fiber, wherein:
(1) a weight fraction of heat-expandable microspheres with a particle size of 8 µm ≤ D ≤ 20 µm is no less than 72% of the total weight of the heat-expandable microspheres;
   a weight fraction of heat-expandable microspheres with a particle size of 10 µm ≤ D ≤ 15 µm is no less than 56% of the total weight of the heat-expandable microspheres;
(2) a thickness of a wall of at least 73% of the heat-expandable microspheres is ≤ 5 µm;
(3) the solvent at least comprises a dodecanol ester, and a weight ratio of the heat-expandable microspheres to the solvent is 17:1;
(4) the inorganic fiber is a nano-aluminosilicate fiber, and a weight ratio of the inorganic fiber to the solvent is 3:5; and
(5) an average thickness of the heat-expandable microspheres is 3.5 µm;
   preferably, the particle size D of the heat-expandable microspheres is 13.15 µm.

The present disclosure further provides a method for preparing the aforementioned composition of heat-expandable microspheres, comprising mixing the heat-expandable microspheres and the solvent, as well as the inorganic fiber optionally added to obtain the composition.

Preferably, the heat-expandable microspheres have the particle size range, weight fraction, and wall thickness as described above.

Preferably, the solvent and the inorganic fiber have the meanings and amounts as described above.

According to an embodiment of the present disclosure, the heat-expandable microspheres with the aforementioned particle size range can be obtained by mixing two, three or more types of heat-expandable microsphere raw materials (referred to as "raw material microspheres" for short). The raw material microspheres may be selected from the types of microspheres known in the art. For example, the raw material microspheres may at least comprise Q1-type microspheres and Q2-type microspheres. Preferably, the particle size of the Q1-type microspheres is 5 µm ≤ D ≤ 16 µm, and the weight fraction of the Q1-type microspheres is no less than 50%, e.g. 50%, 60%, or 70% of the weight of the raw material microspheres.

The initial particle size range of the Q2 type and other types of raw material microspheres can be selected by those skilled in the art as needed, so as to obtain the aforementioned particle size range of the heat-expandable microspheres.

The present disclosure further provides use of the aforementioned composition of heat-expandable microspheres in a coating material, preferably in an aqueous coating material, and more preferably for improving the stability of a coating formed by the coating material, for example, by improving the internal void support of the coating to form a coating with a stable structure.

According to an embodiment of the present disclosure, a weight ratio of the composition of expandable microspheres to the coating material is 1:(4-25), e.g. 1:(5-15), and for example 1:5.7, 1:6, 1:8, 1:9, 1:10, or 1:11.

According to an embodiment of the present disclosure, the coating material can be used as an adhesive in the automotive industry, for example as an adhesive for fixing a magnetic material in the assembly of an automobile engine. Preferably, the magnetic material is a neodymium-iron-boron magnet.

According to an embodiment of the present disclosure, the coating material is a water-based coating material.

According to an embodiment of the present disclosure, the coating material is prepared from a coating composition comprising an aqueous thermoplastic resin, an aqueous thermosetting resin and a hot-melt filling resin.

According to an embodiment of the present disclosure, the aqueous thermoplastic resin is at least one selected from an aqueous acrylic resin and a polyurethane resin.

According to an embodiment of the present disclosure, the aqueous thermosetting resin is at least one selected from an aqueous epoxy resin and hydroxyacrylic acid.

According to an embodiment of the present disclosure, the hot-melt filling resin is at least one selected from modified chlorinated polyvinyl chloride, polyester, polyurethane, polyamide, polyethersulfone, an epoxy resin and polymethylmethacrylate.

The present disclosure further provides a method for improving the stability of a heat-expandable coating, comprising the following step: mixing a composition of heat-expandable microspheres with a coating composition,
wherein both the composition of heat-expandable microspheres and the coating composition have the meanings and mass ratios as described above.

According to an embodiment of the present disclosure, the method comprises: applying the composition of heat-expandable microspheres mixed with the coating composition onto a substrate body, and then heating the substrate body to obtain the heat-expandable coating.

According to an embodiment of the present disclosure, the substrate body is a magnetic material, preferably a neodymium-iron-boron magnet.

According to an embodiment of the present disclosure, the application may be selected from means known in the art, for example spray coating, roller coating, brush coating, coating, electroplating, dipping, roll coating, and other methods for applying the composition of heat-expandable microspheres mixed with the coating composition to the surface of a substrate body.

The present disclosure further provides a substrate comprising a coating and a substrate body, wherein the coating is prepared from a coating material comprising the aforementioned composition of heat-expandable microspheres.

Preferably, the coating is located on the surface of the substrate body.

Preferably, the substrate body has the meaning as described above.

Preferably, the coating material has the meaning as described above.

### Advantageous Effects

The inventors of the present disclosure have found in practice that, due to the uneven shell wall thickness and/or uneven particle size distribution of the heat-expandable microspheres, the spheres with thin shell walls will break preferentially when subjected to the same temperature and internal pressure. Therefore, the microspheres cannot achieve the expected expansion ratio during application, which in turn affects the temperature resistance and adhesion performance of the coating material comprising the expandable microspheres in magnet fixing of automobile engine assembly. During the heat-expansion process, the composition of heat-expandable microspheres of the present disclosure can rapidly soften and destroy the thin-shell spheres in a short period of time in the secondary heat-expansion process of the coating comprising the composition, and with the volatilization of the organic solvent, it was enabled to be cross-linked with a resin matrix in the coating on the surface and inside of the coating to form a cross-linked network structure, thereby strengthening the void support of the coating, and enabling the coating to achieve stepped expansion, and part of the polymer material after expansion wraps an airbag and hardens to form a stable hollow structure. The resultant heat-expandable coating has a stable structure, relatively high resistance to thermal shrinkage, relatively high mechanical strength and adhesion, can be applied in the fixation of high temperature resistant parts, and can maintain the adhesion stability thereof when placed long-term in a high temperature environment (140-180 °C).

### BRIEF DESCRIPTION OF THE DRAWINGS

FIG. 1 is a schematic diagram of the structure of heat-expandable microspheres, wherein the number "1" means a sphere, and the number "2" means a shell wall.
FIG. 2 is a diagram showing the morphology of the heat-expandable microspheres of Example A2 in an unexpanded state (at a magnification of 500 and on a scale of 100 µm).
FIG. 3 is a diagram showing the morphology of the coating comprising heat-expandable microspheres of Example B2 in an unexpanded state (at a magnification of 500 and on a scale of 100 µm).
FIG. 4 is a diagram showing the morphology of the coating comprising heat-expandable microspheres of Example B2 in a fully expanded state (at a magnification of 300 and on a scale of 100 µm).

### DETAILED DESCRIPTION

The technical solutions of the present disclosure will be further illustrated in detail with reference to the following specific examples. It will be understood that the following examples are merely exemplary illustrations and explanations of the present disclosure, and should not be construed as limiting the protection scope of the present disclosure. All techniques implemented based on the content of the present disclosure described above are included within the protection scope of the present disclosure.

Unless otherwise stated, the starting materials and reagents used in the following examples are all commercially available products or can be prepared using known methods.

The heat-expandable microspheres adopted in the present disclosure can be commercially available, and for example are selected from two of 920DU80, 920DU20, 909DU80, and 920DU40 in the Expancel series available from AKZO-Nobel and a composition thereof.

Table 1 shows the main parameters of four types of heat-expandable microspheres in the Expancel series available from AKZO-Nobel.

**Table 1**

| Model | Diameter (±1)/µm | Initial expansion temperature T₁/°C | Maximum heat-resistant temperature T₂/°C |
|---|---|---|---|
| 920DU80 | 18-24 | 123-133 | 185-195 |
| 920DU20 | 5-9 | 120-145 | 155-175 |
| 909DU80 | 18-24 | 120-130 | 175-190 |
| 920DU40 | 10-16 | 123-133 | 185-195 |

### Examples A1-A4

A composition of heat-expandable microspheres as shown in Table 2 comprised:
a composition of heat-expandable microspheres selected from the following:
Example A1: by adopting a composition of different heat-expandable microspheres in the Expancel series available from AKZO-Nobel, the microspheres of models 920DU80 and 920DU20 were homogeneously mixed according to a weight ratio of 1:2, the particle size of the microsphere composition was tested three times by BFS-MAGIC available from Sympatec, Germany, to obtain a microsphere composition of heat-expandable microspheres with an average particle size of 12.08 µm, wherein the Q1 type (particle size of 5 µm ≤ D ≤ 16 µm, i.e., 920DU20 in this example being the Q1-type microsphere) accounted for 67% of the total weight of the microspheres;
Example A2: by adopting a composition of different heat-expandable microspheres in the Expancel series available from AKZO-Nobel, the microspheres of models 920DU80, 920DU20 and 920DU40 were homogeneously mixed according to a weight ratio of 1:1:1, the particle size of the resulting microsphere composition was tested three times by BFS-MAGIC available from Sympatec, Germany, to obtain a microsphere composition of heat-expandable microspheres with an average particle size of 13.15 µm, wherein the Q1 type (particle size of 5 µm ≤ D ≤ 16 µm, i.e., 920DU20 and 920DU40 in this example collectively being the Q1-type microsphere) accounted for 65% of the total weight of the microspheres;
Example A3: the microspheres of models 909DU80, 920DU20 and 920DU40 were homogeneously mixed according to a weight ratio of 1:1:1, the particle size of the resulting microsphere composition was tested three times by BFS-MAGIC available from Sympatec, Germany, to obtain a microsphere composition of heat-expandable microspheres with an average particle size of 14.38 µm, wherein the Q1 type (particle size of 5 µm ≤ D ≤ 16 µm, i.e., 920DU20 and 920DU40 in this example collectively being the Q1-type microsphere) accounted for 65% of the total weight of the microspheres;
Example A4: the microspheres of models 909DU80, 920DU80 and 920DU40 were homogeneously mixed according to a weight ratio of 1:1:1, the particle size of the resulting microsphere composition was tested three times by BFS-MAGIC available from Sympatec, Germany, to obtain a microsphere composition of heat-expandable microspheres with an average particle size of 16.24 µm, wherein the Q1 type (particle size of 5 µm ≤ D ≤ 16 µm, i.e., 920DU40 in this example being the Q1-type microsphere) accounted for 35% of the total weight of the microspheres;
   and
   a dodecanol ester and a nano-aluminosilicate fiber.

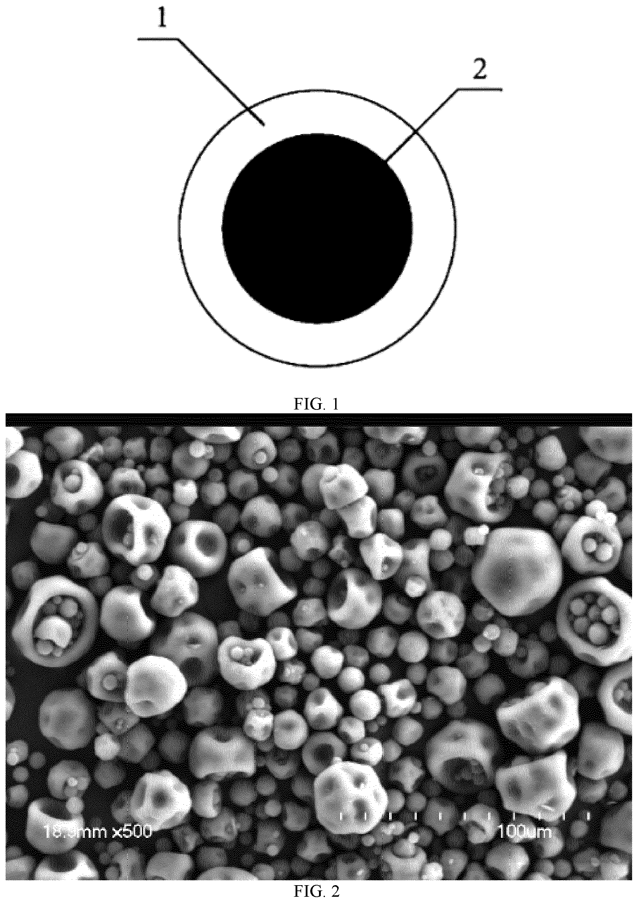

The particle structure of the heat-expandable microspheres is shown in FIG. 1, and the heat-expandable microspheres of Example A1 in an unexpanded state are shown in FIG. 2.

**Table 2**

| Component | Example | Example | Example | Example |
|---|---|---|---|---|
| | A1 | A2 | A3 | A4 |
| Particle size D of composition of heat-expandable microspheres/µm | 12.08 | 13.15 | 14.38 | 16.24 |
| Ratio of heat-expandable microspheres with a particle size of 8 µm ≤ D ≤ 20 µm to total weight of microsphere composition/% | 70 | 72 | 76 | 40 |
| Ratio of heat-expandable microspheres with a particle size of 10 µm ≤ D ≤ 15 µm to total weight of microsphere composition/% | 5 | 56 | 55 | 35 |
| Average thickness of heat-expandable microspheres^{[1]}/µm | 2 | 3.5 | 2.5 | 3 |
| Ratio of heat-expandable microspheres with a thickness ≤ 5 µm to total weight of microsphere composition/% | 90 | 73 | 62 | 51 |
| Amount of heat-expandable microspheres/part by weight | 80 | 85 | 90 | 80 |
| Amount of dodecanol ester/part by weight | 10 | 5 | 10 | 0 |
| Amount of nano-aluminosilicate fiber/part by weight | 10 | 3 | 0 | 20 |

| | | | | |
|---|---|---|---|---|
| Note: [1] the average thickness of the heat-expandable microspheres was tested by a scanning electron microscope (SEM) S-4700 available from Hitachi, Japan, and was the average value of the wall thicknesses of all (≥ 20) microspheres at the visible interface. | | | | |

### Examples B1-B4

Aqueous coating materials B1-B4 comprising a resin, a composition of heat-expandable microspheres, and water were prepared in the following proportions: the content of the resin in the aqueous coating material was: 25 wt% of an aqueous thermoplastic resin (polyurethane resin) and 35 wt% of an aqueous thermosetting resin (hydroxyl acrylic resin), the content of the composition of heat-expandable microspheres was 15 wt%, and the balance was water.

The above compositions of heat-expandable microspheres contained in the aqueous coating materials B1-B4 corresponded to Examples A1-A4, respectively.

### Application Example

The coating material samples of Examples B1-B4 were each applied onto the surface of a sintered neodymium-iron-boron magnet (not magnetized) with specifications of 40 mm × 15 mm × 5 mm in a spray coating manner, and oven-dried under a condition of 70 °C for 30 min to make the surface coating be dried and hardened. The hardened coating had a certain anti-corrosion performance, which was convenient for the transportation and protection of a magnetic sheet. The magnet was transported to the workplace, i.e., the assembly site of a motor rotor, the magnet was inserted into a prepared magnetic steel slot with a width of 5.5 mm, and the rotor workpiece was processed by heating it in a high-temperature oven at 190 °C for 10 min. The processing conditions and test results are as shown in Table 3.

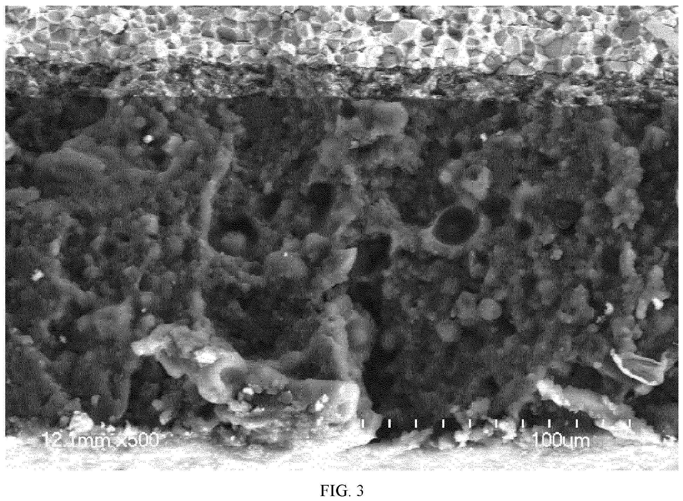

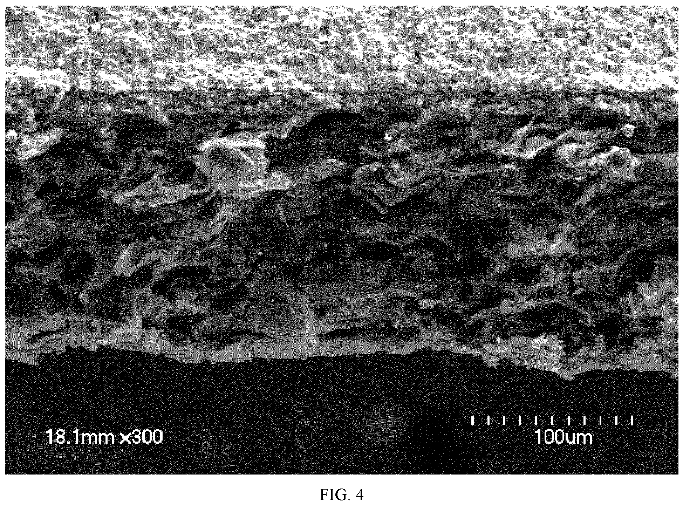

As can be seen from FIG. 3, before expansion, the microspheres were surrounded by the resin (the microspheres were embedded in the resin), and only a small amount of the bodies of the microspheres could be observed. The coating softened after being heated, the expandable microspheres in the coating first expanded when being heated, and after that, almost no complete microspheres could be seen due to the action of the dodecanol ester as a high-boiling point solvent. The shell of the microspheres softened and ruptured, and the microspheres were cross-linked with the resin matrix in the coating to generate a cross-linked coating structure (FIG. 4). The coating had better adhesion after being expanded, and could tightly fill the gap between the magnetic sheet and the slot, so that the magnetic sheet was stably fixed in the slot.

**Table 3 Processing conditions and test results**

| | Sample B1 | Sample B2 | Sample B3 | Sample B4 |
|---|---|---|---|---|
| Expansion temperature/°C | 190 | 190 | 190 | 190 |
| Expansion time/min | 10 | 10 | 10 | 10 |
| Thickness of coating film/µm | 110 | 110 | 110 | 110 |
| Adhesion thrust (room temperature)/Newton | 1147 | 1298 | 1091 | 1042 |
| Adhesion thrust (170 °C)/Newton | 271 | 297 | 218 | 189 |
| Adhesion thrust (oil immersion for 1,500 h) | 261 | 285 | 206 | 176 |

It can be seen from the experimental data of the coatings obtained from the samples B1-B4 that: the particle size of the heat-expandable microspheres added in the sample B4 was 16.24 µm, the proportion of heat-expandable microspheres with a particle size of 8 µm ≤ D ≤ 20 µm was 40%, and the Q1 type (5 µm ≤ D ≤ 16 µm) accounted for 35% of the total weight of the heat-expandable microspheres. The particle size of the heat-expandable microspheres added in the sample B2 was 13.15 µm, and the proportion of heat-expandable microspheres with a particle size of 10 µm ≤ D ≤ 15 µm was 56%. Due to the poor uniformity of particle size of microspheres in the sample B1, when the microspheres with different particle sizes were heated, the core materials with a low boiling point in the microspheres was heated to generate a pressure, thereby causing the expansion of the shell of the microspheres. The pressure generated by the core materials was not sufficiently balanced with the tension generated by the resin wall material due to stretching, and the stability was slightly poor. The adhesion thrust of the coating of the final product at both room temperature and high temperature (170 °C) was slightly worse than that of the sample B2. In the sample B4, among the heat-expandable microspheres, the ratio of the microspheres with a thickness ≤ 5 µm accounted for 51% of the total weight of the microspheres. That is, there were more thick-walled microspheres. When the shell of the microspheres was too thick, the microspheres were difficult to expand and become larger and thus could not form a cross-linked structure with the thermoplastic resin, and the adhesive force decreased. Similarly, in the samples B3 and B4, no inorganic fiber or high-boiling point organic solvent was added, thus failing to facilitate the thermoplastic resin to form a dense protective film on the surface of the coating with the high-boiling point organic solvent. The stability after expansion was slightly worse, and the adhesion thrust at high and low temperatures after expansion was significantly lower than that of the sample B2. Comparing the sample B3 with the sample B4, the performance of the sample B4 comprising no inorganic fiber was worse than that of the sample B3 comprising dodecanol ester as a high-boiling point solvent. After 1500 hours of an oil immersion test, the magnet with the coating prepared from the coating material of the composition of heat-expandable microspheres of the present disclosure had no significant decrease in adhesion thrust and had good long-term adhesion stability.

The inventors had further found that when the initial particle size of the expandable microspheres added in the coating material was about 50 µm (with other parameters being the same as those in Example B2), due to the too large particle size of the expandable microspheres, after expansion, the hollow area of the microspheres was too large, and the compressive strength would also decrease, which was not enough to resist the damage and/or rupture in the process of mixing, pouring, curing and bonding, and finishing of an adhesive composition.

The embodiments of the present disclosure have been described above. However, the present disclosure is not limited to the embodiments described above. Any modification, equivalent, improvement, and the like made without departing from the spirit and principle of the present disclosure shall fall within the protection scope of the present disclosure.

## Claims

1. A composition of heat-expandable microspheres, comprising heat-expandable microspheres and a solvent, wherein:
(1) an initial particle size of the heat-expandable microspheres is 5 µm ≤ D ≤ 40 µm, preferably 8 µm ≤ D ≤ 20 µm;
(2) a thickness of a wall of at least 60% of the heat-expandable microspheres is ≤ 5 µm, and preferably, the thickness is ≤ 3 µm; and
(3) the solvent at least comprises one organic solvent having a boiling point of above 220 °C.

2. The composition according to claim 1, wherein an initial thermal expansion temperature T₁ of the heat-expandable microspheres is 100 °C ≤ T₁ ≤ 200 °C;
preferably, a maximum heat-resistant temperature T₂ of the heat-expandable microspheres is 145 °C ≤ T₂ ≤ 215 °C;
preferably, a weight fraction of heat-expandable microspheres with a particle size of 8 µm ≤ D ≤ 20 µm is no less than 60%, e.g., 60%, 65%, 70%, 72%, 76%, 80%, 90%, or 100% of the total weight of the heat-expandable microspheres; and
preferably, a weight fraction of heat-expandable microspheres with a particle size of 10 µm ≤ D ≤ 15 µm is no less than 50%, e.g., 55%, 56%, 60%, or 70% of the total weight of the heat-expandable microspheres.

3. The composition according to claim 1 or 2, wherein the heat-expandable microspheres comprise a thermoplastic polymer shell and a liquid alkane enclosed within the thermoplastic polymer shell, preferably, the organic solvent having a boiling point of above 220 °C is selected from a dodecanol ester; and
preferably, the solvent comprises one or two of ethylene glycol butyl ether and dipropylene glycol butyl ether, in addition to at least one organic solvent having a boiling point of above 220 °C.

4. The composition according to any one of claims 1-3, wherein a weight ratio of the heat-expandable microspheres to the solvent is (4-40): 1;
preferably, the composition of heat-expandable microspheres optionally further comprises an inorganic fiber; preferably, the inorganic fiber is one, two or more selected from a nano-aluminosilicate fiber, a carbon fiber and a boron fiber;
preferably, a weight ratio of the inorganic fiber to the solvent is (0-2): 1; and
preferably, an expansion ratio of the composition of heat-expandable microspheres is 150%-300%.

5. The composition according to any one of claims 1-4, wherein the composition of heat-expandable microspheres comprises heat-expandable microspheres, a solvent and an inorganic fiber, wherein:
(1) a weight fraction of heat-expandable microspheres with a particle size of 8 µm ≤ D ≤ 20 µm is no less than 60% of the total weight of the heat-expandable microspheres;
a weight fraction of heat-expandable microspheres with a particle size of 10 µm ≤ D ≤ 15 µm is no less than 50% of the total weight of the heat-expandable microspheres;
(2) a thickness of a wall of at least 60% of the heat-expandable microspheres is ≤ 3 µm;
(3) the solvent at least comprises a dodecanol ester;
a weight ratio of the heat-expandable microspheres to the solvent is (5-20): 1; and
(4) the inorganic fiber is a nano-aluminosilicate fiber, and a weight ratio of the inorganic fiber to the solvent is (0.5-1.5):1.

6. A method for preparing the composition of heat-expandable microspheres according to any one of claims 1-5, comprising mixing the heat-expandable microspheres and the solvent, as well as the inorganic fiber optionally added to obtain the composition.

7. Use of the composition of heat-expandable microspheres according to any one of claims 1-5 in a coating material, preferably in an aqueous coating material, and more preferably for improving the stability of a coating formed by the coating material;
preferably, a weight ratio of the composition of expandable microspheres to the coating material is 1:(4-25);
preferably, the coating material is capable of acting as an adhesive in the automotive industry; and preferably, the coating material is a water-based coating material.

8. The use according to claim 7, wherein the coating material is prepared from a coating composition which comprises an aqueous thermoplastic resin, an aqueous thermosetting resin and a hot-melt filling resin.

9. A method for improving the stability of a heat-expandable coating, comprising the following step: mixing a composition of heat-expandable microspheres with a coating composition,
wherein the composition of expandable microspheres has the meaning according to any one of claims 1-5, and the coating composition has the meaning according to claim 8.

10. The method according to claim 9, comprising: applying the composition of heat-expandable microspheres mixed with the coating composition onto a substrate body, and then heating the substrate body to obtain the heat-expandable coating;
preferably, the substrate body is a magnetic material.
